Europäisches Patentamt

(19) European Patent Office

Office européen des brevets

(11) EP 0 845 388 A1

(12) **EUROPEAN PATENT APPLICATION**

(43) Date of publication:
03.06.1998 Bulletin 1998/23

(51) Int. Cl.$^6$: **B60Q 1/115**

(21) Application number: 97118434.6

(22) Date of filing: 23.10.1997

(84) Designated Contracting States:
**AT BE CH DE DK ES FI FR GB GR IE IT LI LU MC NL PT SE**
Designated Extension States:
**AL LT LV RO SI**

(30) Priority: 25.10.1996 IT TO960870

(71) Applicant:
**MAGNETI MARELLI S.p.A.**
**20145 Milano (IT)**

(72) Inventors:
• Scavo, Gennaro
  10142 Torino (IT)
• Valente, Franco
  10100 Torino (IT)

(74) Representative:
**Jorio, Paolo et al**
**STUDIO TORTA S.r.l.,**
**Via Viotti, 9**
**10121 Torino (IT)**

(54) **Device for sensing the pitch angle, particularly for automatically correcting the attitude of the headlights of a vehicle**

(57) Device (6) for sensing the pitch angle ($\gamma$) of a vehicle (1) including a first and a second inclinometric sensors (7, 8) mounted securely on respective arms (9, 10) of a rear suspension (4) and a front suspension (5), respectively, of the vehicle; these sensors (7, 8) being able to generate respective signals ($S_1$, $S_2$) corresponding to the angles ($\alpha$, $\beta$) between the arms (9, 10) of the respective suspensions (4, 5) and respective reference axes ($A_1$, $A_2$) extending transversely to the vehicle. The device (6) also comprises a third inclinometric sensor (16) mounted securely on the bodywork (3) of the vehicle and able to detect centrifugal forces acting on the vehicle and generate a correction signal ($S_3$) corresponding to said centrifugal forces in order to correct the signals ($S_1$, $S_2$). The signals ($S_1$, $S_2$, $S_3$) are processed by a processing unit (18) contained in a central electronic control unit (17) that controls a headlight attitude adjusting system.

Fig.2

**Description**

The present invention relates to a device for sensing the pitch angle, particularly for automatically correcting the attitude of the headlights of a vehicle.

A vehicle's headlights are usually mounted immovably on the bodywork and are fitted with a manual adjustment device for adjusting their angle in a vertical plane. This adjustment device is of particular use in compensating for variations in the attitude of the vehicle caused by, say, a change in the static load (passengers and/or luggage). However, when the vehicle is moving, the accelerations of the vehicle itself cause pitching of the body with consequent changes in the angle of the light beams emitted by the headlights relative to the plane of the ground.

The prior art includes systems for sensing the pitch angle of the body of a vehicle which work in conjunction with a headlight attitude adjusting system in order to adjust the angle of the headlights automatically; in this way the distance at which the beams strike the ground can be kept approximately constant as the vehicle moves along, or following a change in vehicle attitude caused by, say, a change in the load carried by the vehicle.

One of the known systems comprises a pair of rotary sensors (of potentiometric, Hall-effect or capacitive type) mounted on the bodywork, one on a front suspension and one on a rear suspension lined up with each other on the same side of the vehicle. The linking of the sensors and their respective suspensions is by means of respective connecting rod joints whose movements, which are in proportion to the rotation of the corresponding suspensions relative to the bodywork, are detected by the sensors; immediate processing of the data produced by the sensors gives an output of the pitch angle of the vehicle at a given moment and enables the headlamp aim to be corrected automatically to take account of this new situation.

This sensing system has the drawback, however, of requiring a system of links to connect the sensor to its respective suspension, and are therefore complicated and space-hungry. Furthermore, this system presents problems of reliability because the links are exposed to the action of external agents which can cause their rapid deterioration.

Other known systems employ ultrasound sensors which sense the distance from the front and rear parts of the bodywork to the ground, or load cell systems in which the load cells are positioned between the suspension springs and the bodywork. Both of these systems are however still used only for laboratory tests or on experimental prototypes, being of inadequate reliability for application to mass-produced vehicles.

The object of the present invention is to provide a device for sensing the pitch angle, particularly for automatically correcting the attitude of the headlights of a vehicle, that will overcome the drawbacks of known devices and systems, and that will be simple and economical to produce.

The present invention accordingly provides a device for sensing the pitch angle of a vehicle, comprising detector means for generating respective attitude signals from respective suspensions of the vehicle; characterized in that said detector means comprise a first and a second inclinometric sensors mounted on respective arms of said suspensions and each able to sense an angle of rotation of said respective arm with respect to a respective predetermined direction; which sensing device comprises means for processing said attitude signals and generating an output signal corresponding to said pitch angle.

In order to provide a more thorough explanation of the present invention, a preferred embodiment will now be described, purely by way of a non-restrictive example, with reference to the attached drawings, in which:

- Figure 1a is a side view of a vehicle on which the device of the invention is mounted;
- Figure 1b schematically indicates the position of the suspensions with respect to the ground when the vehicle is in a variety of different attitudes;
- Figure 2 shows the layout of the components of the device on the vehicle; and
- Figures 3a and 3b schematically show the changes in angle of the arms of the rear and front suspensions respectively, when the vehicle is in different attitudes.

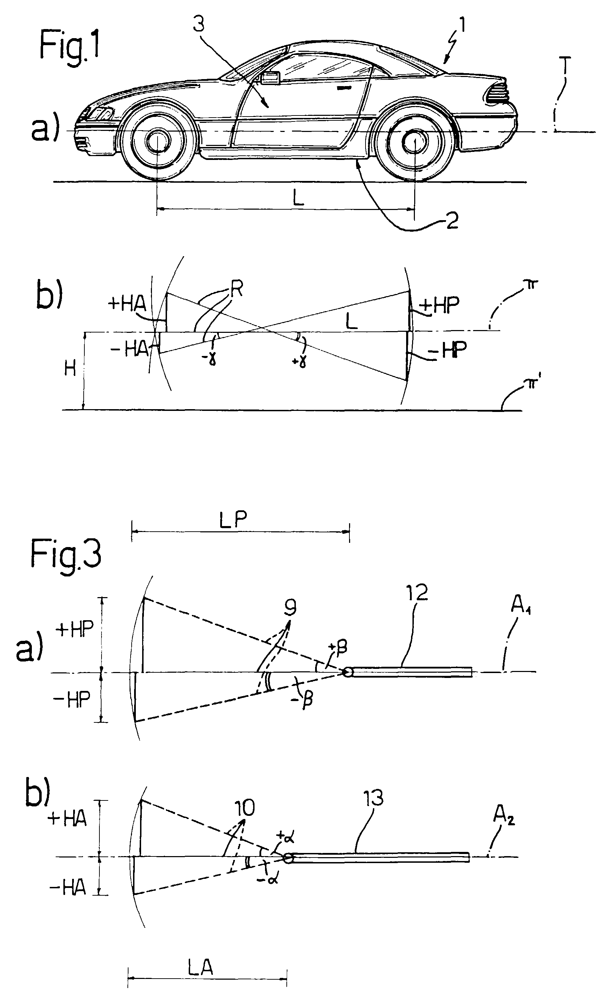

With reference to Figures 1a and 1b, the numeral 1 denotes a vehicle having a wheelbase L between the front wheels and rear wheels and a distance H between a lower portion 2 of the bodywork 3 and the ground; for convenience of illustration, the lower portion 2 of the bodywork 3 and the ground are represented by respective planes identified by the lines $\pi$ and $\pi'$ which are mutually parallel and horizontal.

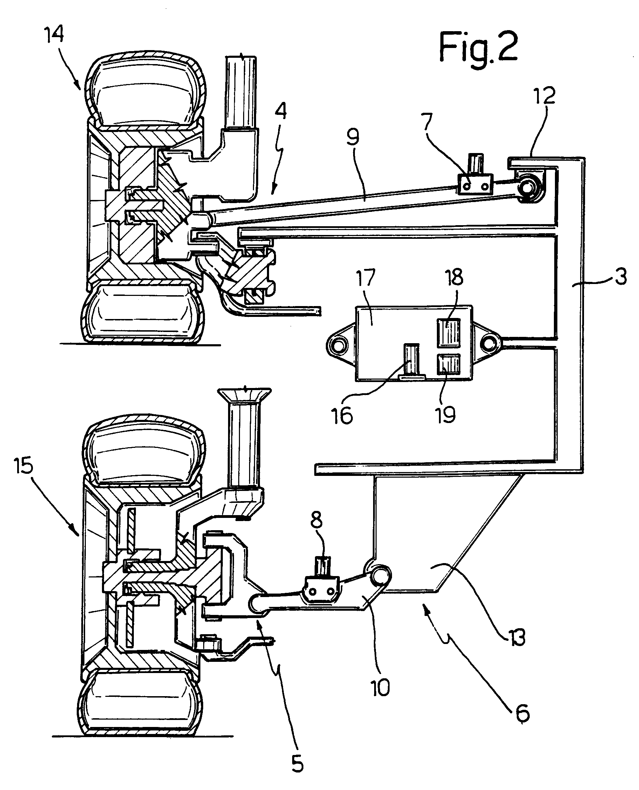

Fig. 1b, as will be described in detail later, shows the variations in height (denoted HA and HP) of a rear suspension 4 and of a front suspension 5 (Fig. 2) resulting from changes in the attitude of the vehicle 1. The rear suspension 4 and front suspension 5 correspond to a rear wheel 14 and front wheel 15, respectively, situated on the same side of the vehicle 1.

Figure 2 shows a device bearing the general reference 6 for sensing the pitch angle of the vehicle 1, comprising a first and second inclinometric sensors 7, 8 of known type mounted on respective pivoting arms 9, 10 of the rear suspension 4 and front suspension 5 respectively. In particular, the arms 9 and 10 have respective lengths LP and LA and are hinged at one end to their corresponding suspensions 4, 5, and at the other to a first 12 and second 13 portions, respectively, of the bodywork 3.

The first and second sensors 7, 8 generate respective signals $S_1$ and $S_2$ relating to the attitude of the respective suspensions 4, 5 of the vehicle; in particular, the signals $S_1$ and $S_2$ relate to the angular variations of the corresponding arms 9, 10 with respect to reference axes $A_1$, $A_2$, which will be defined later.

The device 6 also comprises a third inclinometric sensor 16 fixed securely to the bodywork 3 and able to generate a signal $S_3$ indicative of centrifugal force, which is present whenever the vehicle 1 moves in other than a straight line; the third sensor 16 may, by way of example, be mounted within a central electronic control unit 17 on board the vehicle 1, as shown in Figure 2.

The three inclinometric sensors 7, 8 and 16, illustrated only diagrammatically in Figure 2, are of the type in which a rod is pivoted at one end to a fixed part of the sensor while its other end carries a swinging weight, and they can sense variations in the angle of the object on which they are mounted. In particular, in accordance with one aspect of the invention, the sensors 7 and 8 are positioned so as to sense angles only in planes perpendicular to a longitudinal central axis T of the vehicle 1 (Fig. 1a).

Lastly, the device 6 also comprises a processor unit 18 within the central electronic control unit 17 (as illustrated schematically in Figure 2) which processes the first signal $S_1$, the second signal $S_2$ and the third signal $S_3$ in order to generate an output signal $S_4$ corresponding to the pitch angle $\gamma$ of the vehicle 1 (Fig. 1b) which will be defined later. Also present within the central electronic control unit 17 is a low-pass filter 19 which filters out components of the signal $S_4$ whose frequency is higher than a predetermined value (for example 10 Hz).

The output of the processor unit 18 is connected to a headlight attitude adjusting system of known type, not illustrated.

In order that the working of the device 6 may be understood, reference should first be made to Figure 1b which shows, not to scale, variations in the height HA and HP of the front and rear suspensions caused by changes in the static or dynamic loading conditions of the vehicle 1, and corresponding variations of angle of a longitudinal axis R passing through the suspensions 4 and 5. In particular, $\gamma$ is an angle that measures the rotation of the axis R with respect to a fixed direction which for simplicity's sake will be taken to coincide with the horizontal; the angle $\gamma$ defines the pitch angle of the vehicle 1.

In an initial condition of the vehicle when unloaded and stationary (or in motion with constant velocity) the height of the suspensions 4 and 5 off the ground can be approximated to H and the pitch angle $\gamma$ is zero. In a second condition, which occurs for example when the vehicle 1 is braking, the front suspension 5 sinks by -HA relative to the ground and the rear suspension 4 rises by +HP, which means that the pitch angle $\gamma$ assumes negative values. In a third condition, which occurs for example when the vehicle 1 is accelerating or is loaded at the back, the front suspension 5 rises by +HA while the rear suspension 4 drops by -HP, and the pitch angle $\gamma$

assumes positive values.

By making use of simple geometrical considerations it is possible to calculate the value of the pitch angle $\gamma$ as a function of the position of the suspensions 4 and 5 with respect to the ground. We have:

$$\gamma = \arcsin[(HA - HP)/L] \qquad (1)$$

in which it is assumed that L, which stands for the wheelbase of the vehicle 1, is also equal to the distance between the rear 4 and front 5 suspensions.

The variations in the heights HA and HP of the suspensions 4 and 5 are calculated, as described below, by making use of the sensors 7 and 8 which sense the rotations of the arm 9 and arm 10, respectively, with respect to the corresponding portions 12 and 13 of the body 3.

In Figures 3a and 3b the letters $\alpha$ and $\beta$ indicate the angles formed by the arms 9 and 10, which are assumed to be straight, with the corresponding horizontal reference axes $A_1$ and $A_2$ caused by changes in the static or dynamic loading conditions of the vehicle 1 concomitantly with the abovementioned variations in the heights HA and HP of the suspensions 4 and 5. For example positive variations +HP and +HA in the heights of the suspensions 4 and 5 give the angles $\alpha$ and $\beta$ positive values, whereas negative variations -HP and -HA give the angles $\alpha$ and $\beta$ negative values.

The values of angles $\alpha$ and $\beta$ are sensed moment by moment by the sensors 7 and 8 and transmitted in the form of the signals $S_1$ and $S_2$ to the processor unit 18.

The processing of the values of angles $\alpha$ and $\beta$ to derive the value of the pitch angle $\gamma$ is very simple: from Figure 3 it can easily be seen that:

$$HA = LA \cdot \sin\alpha \text{ and } HP = LP \cdot \sin\beta.$$

Substituting these expressions in formula (1) gives:

$$\gamma = \arcsin[(LA \cdot \sin\alpha - LP \cdot \sin\beta)/L] \qquad (2)$$

Formula (2) applies when the vehicle 1 is moving in a straight or nearly straight line. This is because under these conditions the third sensor 16, which, as stated earlier, measures the centrifugal force acting on the vehicle 1 in the case of nonrectilinear motion, being positioned nearer the longitudinal central plane T of the vehicle 1 than the sensors 7 and 8, detects much smaller variations in lateral inclination of the body 3 than those detected by the sensors 7 and 8. The signal $S_3$ sent by the sensor 16 to the central electronic control unit 17 is therefore ignored.

When the vehicle 1 is following a curved path the measurement of the lateral inclination of the body 3 supplied by the third sensor 16 may become comparable with that supplied by sensors 7 and 8. In particular, the signal $S_3$ is made use of by the processing unit 18 only if it indicates a change in lateral inclination greater than a predetermined minimum value (for example 5°).

Under this condition of motion of the vehicle 1, the signals $S_1$ and $S_2$ of the sensors 7 and 8 are misleading, because affected by the centrifugal force produced by cornering. The third sensor 16 measures an angle $\delta$ proportional to the centrifugal force, the value of which is then used by the processor unit 18 to correct the calculated pitch angle as follows:

$$\gamma = \arcsin\{[LA \cdot \sin(\alpha - \delta) - LP \cdot \sin(\beta - \delta)]/L\} \quad (3)$$

The angle $\gamma$ expressed by formula (3) represents the pitch angle of the vehicle 1 under the most general conditions. As a function of this angle, the central electronic control unit 17 outputs a control signal $S_4$ to the headlight attitude adjusting system. This signal is appropriately filtered by the low-pass filter 19 to limit its frequency so that the headlight attitude adjusting system is not activated by signals arising from sudden changes in vehicle attitude such as might arise from road surface irregularities encountered by the travelling vehicle.

The advantages of the present device are as follows.

In the first place, the inclinometric sensors 7, 8, 16 have no internal moving electronic contacts and are therefore highly reliable and accurate. Moreover, the geometry of the device 6 is very simple, inasmuch as the sensors 7, 8 are mounted directly on the suspensions 4, 5 and require no connecting rod systems to link them to these suspensions 4, 5. Equally simple is the vehicle interface of the device 6, both electrically and mechanically, which is a direct consequence of the simplicity of the sensors 7, 8, 16.

Furthermore, since the measurement of the pitch angle $\gamma$ by the device 6 is performed directly and only by sensing variations in the angles of the arms 9, 10, this measurement is independent of the presence or absence of active suspensions for dynamic adjustment.

What is more, owing in part to the features explained above, the device is easy to build and fit, as well as being robust and reliable.

Finally, it will be clear that the device described and illustrated herein for sensing the pitch angle can be modified and varied without thereby departing from the scope of the present invention.

**Claims**

1. Device for sensing the pitch angle ($\gamma$) of a vehicle (1), comprising detector means (7, 8) for generating respective attitude signals ($S_1$, $S_2$) from respective suspensions (4, 5) of the vehicle; characterized in that said detector means comprise a first and a second inclinometric sensors (7, 8) mounted on respective arms (9, 10) of said suspensions (4, 5) and each able to sense an angle of rotation ($\alpha$, $\beta$) of said respective arm (9, 10) with respect to a respective predetermined direction ($A_1$, $A_2$); which sensing device comprises means (18) for processing said attitude signals ($S_1$, $S_2$) and generating an output signal ($S_4$) corresponding to said pitch angle ($\gamma$).

2. Device according to Claim 1, characterized in that it comprises a third inclinometric sensor (16) fixed securely to the bodywork (3) of the vehicle; said third inclinometric sensor (16) being able to sense centrifugal forces acting on the vehicle and generate a correction signal ($S_3$) corresponding to said centrifugal forces in order to correct said attitude signals ($S_1$, $S_2$); said processing means (18) being able to process said correction signal ($S_3$) together with said attitude signals ($S_1$, $S_2$) in order to generate said output signal ($S_4$).

3. Device according to Claim 2, characterized in that said first, second and third inclinometric sensors (7, 8, 16) are able to sense angles ($\alpha$, $\beta$, $\delta$) on planes perpendicular to a central longitudinal axis of the vehicle (T).

4. Device according to any one of the previous claims, characterized in that it comprises a low-pass filter (19) contained within a central electronic control unit (17) on board the vehicle, which only lets through components of said output signal ($S_4$) whose frequency is less than a predetermined frequency.

5. Device according to Claim 4, characterized in that said third inclinometric sensor (16) and said processing means (18) are contained within said central electronic control unit (17).

Fig.1

a)

b)

Fig.3

a)

b)

Fig.2

European Patent
Office

**EUROPEAN SEARCH REPORT**

Application Number

EP 97 11 8434

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 21 61 982 A (WESTFÄLISCHE METALL INDUSTRIE KG, HUECK & CO) * claim 1; figure 1 * | 1,2 | B60Q1/115 |
| X | US 4 833 573 A (MIYAUCHI) * column 9, line 53 - column 10, line 23; figure 123 * | 1-3 | |
| X | FR 2 289 366 A (DAIMLER-BENZ AG) * page 1, line 26 - page 2, line 23; figure 3 * | 1,2 | |
| X | DE 94 18 662 U (CMS MIKROSYSTEME GMBH) * claim 6; figures 3-7 * | 1,2 | |
| X | DE 38 27 149 C (KOITO SEISAKUSHO CO) * column 22, line 8 - line 64; figure 18 * | 1 | |

TECHNICAL FIELDS SEARCHED (Int.Cl.6)

B60Q

The present search report has been drawn up for all claims

| Place of search | Date of completion of the search | Examiner |
|---|---|---|
| THE HAGUE | 26 January 1998 | Onillon, C |